# FASCICULE DE BREVET EUROPEEN

(11) **EP 1 360 830 B1**
(45) Date de publication et mention de la délivrance du brevet: **02.11.2006**
(21) Numéro de dépôt: 02701362.2
(22) Date de dépôt: 31.01.2002
(51) Int. Cl.: H04M 19/04

(54) **DISPOSITIF DE SIGNALISATION DE LA RECEPTION D'UN APPEL TELEPHONIQUE SUR UN EQUIPEMENT TERMINAL**
ANRUF-SIGNALISIERUNGSVORRICHTUNG FÜR KOMMUNIKATIONSENDGERÄT
DEVICE FOR SIGNALLING THE RECEIPT OF A TELEPHONE CALL ON A PIECE OF TERMINAL EQUIPMENT

(30) Priorité: 01.02.2001 FR 0101363
(43) Date de publication de la demande: 12.11.2003
(73) Titulaire: FRANCE TELECOM, 75015 Paris (FR)
(72) Inventeur: SIMON, Marie-Paule, F-22560 Pleumeur Bodou (FR); LAOT, André, F-22300 Lannion (FR)
(74) Mandataire: Joly, Jean-Jacques
(86) Numéro de dépôt international: PCT/FR2002/000371
(87) Numéro de publication internationale: WO 2002/062048

(56) Documents cités:
- EP-A- 0 604 081
- WO-A-99/08174
- GB-A- 2 292 271
- PATENT ABSTRACTS OF JAPAN vol. 012, no. 094 (E-593), 26 mars 1988 (1988-03-26) & JP 62 226749 A (SAN TEREHON KK), 5 octobre 1987 (1987-10-05)

## Description

La présente invention concerne le domaine des dispositifs de gestion de télécommunications.

Plus précisément, la présente invention concerne un moyen de signalisation de la réception d'appels téléphoniques.

Les méthodes de signalisation d'appels actuelles comme décrit dans le document EP 0 604 081 A sont généralement sonores, visuelles ou tactiles (vibreurs) et font donc appel à trois sens physiologiques : l'audition, la vue et le toucher. Les moyens de signalisation de type sonore et visuel sont les plus couramment utilisés.

La signalisation par le toucher est utilisée généralement par les personnes souffrant de fortes déficiences visuelles ou auditives, ou encore dans des circonstances où l'appel sonore est interdit, par exemple dans des salles de spectacle ou de réunion.

Par ailleurs, les interfaces de télécommunications récentes permettent de plus de faire connaître aux abonnés appelés, l'origine de l'appel. Pour cela, de nouveaux services, appelés par exemple « identification de l'appelant » ou « présentation du numéro (CLIP) » ont été proposés. Sur les postes ainsi abonnés, le numéro de l'appelant est affiché sur un écran dont est doté l'équipement de l'abonné appelé. Si l'équipement terminal ou le réseau possède un répertoire interne, le nom de l'appelant peut également être affiché. Dans certains cas, les numéros des appels entrants sont analysés, classifiés et signalés par des sonneries différenciées ou par l'énoncé en mode audio du nom associé à l'appel.

Les services de signalisation actuels ainsi proposés sont efficaces. Cependant, il peut arriver que dans certaines situations, ils ne donnent pas totalement satisfaction.

Par exemple, si l'appelé souffre d'un handicap auditif, il peut certes être équipé d'un bracelet vibrant, qui lui permet de savoir qu'un appel lui est destiné, néanmoins, il ne peut pas ainsi identifier l'origine de l'appel.

Par ailleurs, dans certaines circonstances, le contexte d'utilisation peut aussi être contraignant (obscurité ou silence absolu requis) et ne pas permettre d'utiliser les dispositifs de signalisation traditionnels connus.

La présente invention a pour but d'apporter une solution de remplacement ou complémentaire aux méthodes de signalisation d'appel traditionnellement utilisées.

La présente invention a en particulier pour but de permettre une solution de remplacement ou complémentaire destinée aux personnes souffrant de déficience visuelle et/ou auditive, pour leur permettre d'apprécier un autre sens pour percevoir un appel et éventuellement en identifier l'origine.

Ce but est atteint dans le cadre de la présente invention grâce à un système comprenant en combinaison :
- au moins une capsule ou cartouche comprenant un produit odorant, et
- un moyen de commande apte à détecter la réception d'un appel téléphonique sur un poste spécifique et à commander la diffusion en conséquence du produit odorant.

Selon une autre caractéristique avantageuse de la présente invention, le système comprend une résistance électrique associée à chaque capsule, pour provoquer sur commande l'échauffement du produit odorant contenu dans celle-ci.

Selon une autre caractéristique avantageuse de la présente invention, le système comprend plusieurs capsules ou cartouches contenant des produits odorants différents et le moyen de commande est adapté pour détecter l'identité de l'appelant et assurer en conséquence la diffusion d'une odeur ou combinaison d'odeurs représentative de l'identité de l'appelant.

D'autres caractéristiques, buts et avantages de la présente invention apparaîtront à la lecture de la description détaillée qui va suivre, et en regard des dessins annexés, donnés à titre d'exemples non limitatifs et sur lesquels :
- la figure 1 représente une vue schématique, sous forme de blocs fonctionnels, d'un système conforme à la présente invention, et
- la figure 2 représente une vue similaire d'un système conforme à une variante de réalisation évoluée de la présente invention.

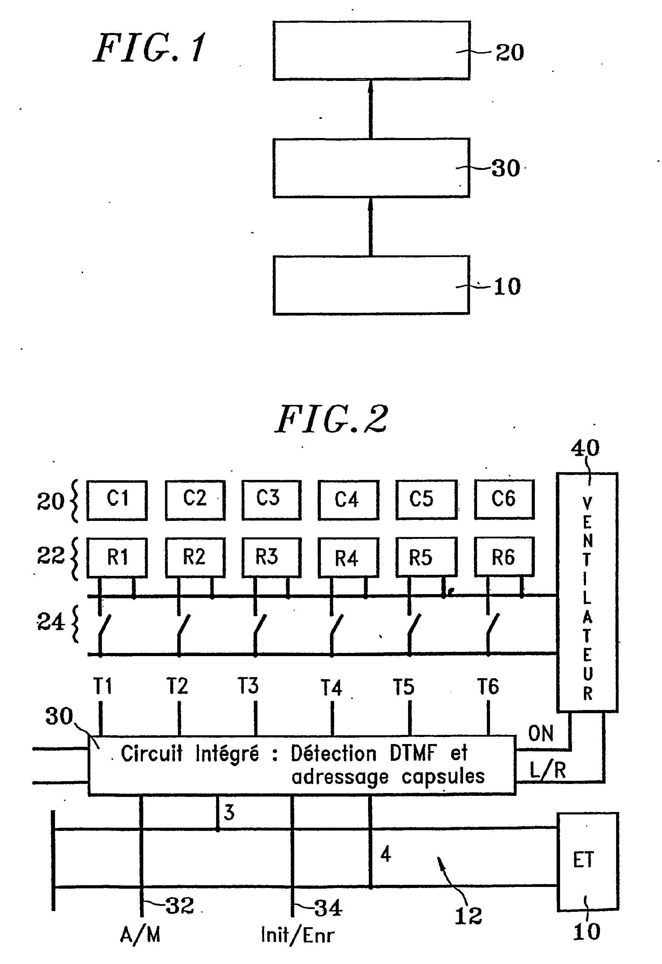

On aperçoit, schématisé sur la figure 1, un récepteur téléphonique classique 10, un élément 20 qui loge au moins une capsule ou cartouche contenant un produit odorant, et un moyen de commande 30 apte à détecter la réception d'un appel téléphonique sur le poste téléphonique 10 associé et commander en conséquence la diffusion du produit odorant contenu dans l'élément 20.

Le dispositif de base ainsi illustré sur la figure 1 peut être utilisé pour une simple signalisation de la réception d'un appel sur le poste 10.

Cependant, de préférence, dans le cadre de la présente invention, le système est adapté en outre pour assurer une fonction d'identification de l'appelant.

A cette fin de préférence, le système conforme à la présente invention comprend plusieurs capsules ou cartouches contenant des produits odorants différents, et le moyen de commande 30 est adapté pour piloter sélectivement ces capsules ou cartouches.

Dans ce contexte, dans le cadre de la présente invention, en fonction de l'identité de l'appelant, le moyen de commande 30 peut assurer l'activation de l'une sélectivement choisie des capsules 20 ou encore l'activation d'une séquence choisie de plusieurs cartouches successivement, ou encore l'activation simultanée d'une combinaison de cartouches.

On a ainsi schématisé sur la figure 2 une variante de réalisation évoluée de la présente invention comprenant, associé à un poste téléphonique 10, un moyen de commande 30 apte à activer de manière contrôlée une pluralité de capsules 20. Selon la représentation donnée sur la figure 2, il est ainsi prévu six de telles cartouches 20. Cependant, l'invention n'est pas limitée à ce nombre particulier.

La présente invention peut trouver application dans tout type de télécommunications, qu'il s'agisse de liaisons analogiques, numériques, en réseau, fixes, portables, intégrées au réseau Internet, etc... voire même tout système téléphonique intégré à un micro-ordinateur ou équivalent.

Le module 30 et les moyens 20 logeant le produit odorant peuvent être intégrés au poste récepteur téléphonique 10 ou constitués d'un module indépendant associé à celui-ci.

Sur la figure 2, on a schématisé un poste téléphonique 10 lié à un réseau filaire 12 et un moyen de commande 30 branché en parallèle de celui-ci.

En pratique, chaque capsule ou cartouche 20 est associée de préférence à une résistance électrique respective 22 dont l'alimentation électrique assurée par un interrupteur respectif 24 est contrôlée par le moyen de commande 30 en fonction de l'identité de l'appelant détectée par le module 30.

Les capsules ou cartouches 20 sont de préférence maintenues en permanence à une température plaçant le produit odorant ou parfum à quelques degrés du seuil de tension ou d'évaporation. Un seuil de tension supérieur, par exemple, à 30°C est souhaitable. Dans un environnement domestique ou professionnel normal, la température ambiante est en principe inférieure à ce niveau.

Le produit odorant peut être conditionné sous forme liquide ou solide.

La température de conditionnement est inférieure de plusieurs degrés à la température de tension moléculaire afin d'éviter des évaporations intempestives.

Dès lors que le moyen de commande 30 assure l'alimentation d'une résistance électrique 22 par fermeture de l'interrupteur 24 associé, la capsule 20 correspondante est chauffée et le produit odorant correspondant vaporisé.

Les capsules 20 logeant le produit odorant peuvent être prévues sur un support amovible jetable unique, c'est à-dire commun pour toutes les capsules 20. En variante, chaque capsule 20 peut être conditionnée sur un support spécifique jetable. Selon encore une autre variante, on peut prévoir des supports modulaires regroupant plusieurs capsules 20.

Selon une variante, il peut être proposé des sous-ensembles modulaires contenant un nombre variable de capsules 20 selon le nombre d'appelants que l'abonné souhaite ainsi identifier.

On a par ailleurs schématisé sur la figure 2 un ventilateur 40.

La fonction première d'un tel ventilateur 40 est de favoriser la diffusion du parfum choisi. Cependant, le ventilateur 40 peut posséder diverses fonctions annexes.

A cette fin, de préférence, le ventilateur 40 et le moyen de commande 30 associé sont adaptés pour permettre sélectivement la commande du ventilateur 40 sous deux régimes : l'un lent, l'autre rapide.

Le ventilateur 40 peut être utilisé également pour assurer le refroidissement de la capsule 20 après décrochage ou non réponse.

Dans ce contexte, de préférence, la ventilation lente est utilisée pour la diffusion du parfum choisi et la ventilation rapide est utilisée après décrochage pendant 1 s pour assurer la dispersion et le retour sous le seuil de tension des capsules de parfum.

La programmation du module 30 (destinée à définir la ou les capsules(s) 20 à activer en fonction de l'identité de l'appel reçu) peut être opérée selon toute disposition connue de l'homme de l'art, de manière autonome, à partir d'un mode opératoire fourni, par activation de touches prévues sur le module 30, ou encore par activation des touches prévues sur l'équipement terminal 10, ou encore par validation d'appel reçu et mémorisé.

A cette fin, on a schématisé sur la figure 2 deux lignes 32, 34, liées au moyen de commande 30 : une ligne 32 susceptible d'être utilisée pour assurer une mise en service et hors service du dispositif de signalisation olfactif conforme à l'invention et une ligne 34 qui selon son état place soit le module de commande en mode d'initialisation, prêt à une programmation, soit en mode de fonctionnement normal, après programmation.

Bien entendu, la présente invention n'est pas limitée au mode de réalisation particulier qui vient d'être décrit mais s'étend à toute variante conforme à son esprit.

L'homme de l'art comprendra que le système conforme à la présente invention peut être complémentaire des solutions existantes pour signaler l'arrivée d'un appel sur un poste téléphonique. La présente invention permet notamment d'accompagner une sonnerie par une odeur ou un parfum particulier permettant d'identifier l'appelant. Le système conforme à la présente invention peut s'avérer utile notamment pour un abonné déficient visuel ou sonore. Mais la présente invention possède également un aspect ludique.

Dans le cas où le système conforme à l'invention est connecté en parallèle de l'équipement terminal téléphonique de l'abonné 10, le système conforme à l'invention doit bien entendu posséder des caractéristiques électriques adaptées pour ne pas perturber la réception, notamment une impédance de ligne élevée, typiquement supérieure à 10 000 Ω.

## Revendications

1. Système de signalisation de - la réception d'un appel téléphonique sur un équipement terminal (10), **caractérisé par le fait qu'**il comprend en combinaison :
- au moins une cartouche ou capsule (20) contenant un produit odorant, et
- un moyen (30) de commande apte à détecter la réception d'un appel téléphonique sur un poste spécifique (10) et à commander la diffusion en conséquence du produit odorant.

2. Système selon la revendication 1, **caractérisé par le fait qu'**il comprend une résistance électrique chauffante (22) associée à chaque capsule ou cartouche (20).

3. Système selon l'une des revendications 1 ou 2, **caractérisé par le fait qu'**il comprend plusieurs capsules ou cartouches contenant des produits odorants différents et que le moyen de commande (30) est adapté pour détecter l'identification de l'appelant et assurer en conséquence la diffusion d'une odeur ou combinaison d'odeurs représentative de l'identité de l'appelant.

4. Système selon la revendication 3 **caractérisé par le fait que** le moyen de commande (30) est adapté pour une commande choisie dans le groupe comprenant : 1) l'activation de l'une sélectivement des capsules (20), 2) l'activation d'une séquence choisie de plusieurs cartouches successivement et 3) l'activation simultanée d'une combinaison de cartouches.

5. Système selon l'une des revendications 1 à 4, **caractérisé par le fait que** la capsule ou cartouche (20) est placée sur un support amovible jetable.

6. Système selon l'une des revendications 1 à 5, **caractérisé par le fait qu'**il comprend en outre un ventilateur (40).

7. Système selon la revendication 6, **caractérisé par le fait que** le ventilateur (40) est adapté pour deux régimes de fonctionnement, l'un lent, l'autre rapide.

8. Système selon la revendication 7 **caractérisé par le fait que** le ventilateur (40) est commandé en premier lieu en mode lent, lors de la détection d'un appel, pour assurer la diffusion d'un parfum, puis en mode rapide, pour assurer le refroidissement de chaque cartouche ou capsule (20) activée.

9. Système selon l'une des revendications 1 à 8, **caractérisé par le fait que** le moyen de commande est adapté pour être programmé afin d'assurer une diffusion de parfum représentative de l'identité de l'appelant sur la base de l'une des modalités choisies dans le groupe comprenant : une programmation autonome à l'aide de touches prévue sur le moyen de commande (30), une programmation à l'aide de touches prévues sur un équipement terminal associé (10), ou encore une programmation par validation d'appels reçus sur l'équipement terminal associé (10).

## Claims

1. System for signalling the receipt of a telephone call on a terminal equipment (10), **characterized in that** it comprises in combination:
- at least one cartridge or capsule (20) containing an odorous product, and
- a means (30) of control able to detect the receipt of a telephone call on a specific set (10) and to control the diffusion as a consequence of the odorous product.

2. System according to Claim 1, **characterized in that** it comprises a heating electric resistor (22) associated with each capsule or cartridge (20).

3. System according to one of Claims 1 or 2, **characterized in that** it comprises several capsules or cartridges containing different odorous products and that the means of control (30) is adapted for detecting the identification of the caller and for ensuring as a consequence the diffusion of an odour or combination of odours that is representative of the identity of the caller.

4. System according to Claim 3, **characterized in that** the means of control (30) is adapted for a command chosen from the group comprising: 1) the activation of one selectively of the capsules (20), 2) the activation of a chosen sequence of several cartridges successively and 3) the simultaneous activation of a combination of cartridges.

5. System according to one of Claims 1 to 4, **characterized in that** the capsule or cartridge (20) is placed on a disposable removable support.

6. System according to one of Claims 1 to 5, **characterized in that** it furthermore comprises a fan (40).

7. System according to Claim 6, **characterized in that** the fan (40) is adapted for two operating regimes, one slow, the other fast.

8. System according to Claim 7, **characterized in that** the fan (40) is firstly controlled to operate in slow mode, upon the detection of a call, so as to ensure the diffusion of a perfume, then in fast mode, to ensure the cooling of each cartridge or capsule (20) activated.

9. System according to one of Claims 1 to 8, **characterized in that** the means of control is adapted for being programmed so as to ensure a perfume diffusion representative of the identity of the caller on the basis of one of the modalities chosen from the group comprising: autonomous programming with the aid of keys, provided on the means of control (30), programming with the aid of keys provided on an associated terminal equipment (10), or else programming by validation of calls received on the associated terminal equipment (10).

## Patentansprüche

1. System zum Melden des Empfangs eines Telephonanrufs bei einer Endeinrichtung (10), **dadurch gekennzeichnet, dass** es in Kombination umfasst:
- wenigstens eine Patrone oder Kapsel (20), die einen Duftstoff enthält, und
- ein Steuermittel (30), das den Empfang eines Telephonanrufs bei einer bestimmten Station (10) erfassen und die anschließende Diffusion des Duftstoffs steuern kann.

2. System nach Anspruch 1, **dadurch gekennzeichnet, dass** es einen elektrischen Heizwiderstand (22) umfasst, der jeder Kapsel oder Kartusche (20) zugeordnet ist.

3. System nach einem der Ansprüche 1 oder 2, **dadurch gekennzeichnet, dass** es mehrere Kapseln oder Kartuschen umfasst, die unterschiedliche Duftstoffe enthalten, und dass das Steuermittel (30) so beschaffen ist, dass es die Identität des Anrufers erfasst und anschließend die Diffusion eines Dufts oder einer Kombination von Düften, die die Identität des Anrufers repräsentieren, gewährleistet.

4. System nach Anspruch 3, **dadurch gekennzeichnet, dass** das Steuermittel (30) für eine Steuerung ausgelegt ist, die aus der Gruppe gewählt ist, die umfasst: 1) wahlweise Aktivierung einer der Kapseln (20), 2) sukzessive Aktivierung einer Folge, die aus mehreren Kartuschen gewählt ist, und 3) gleichzeitige Aktivierung einer Kombination von Kartuschen.

5. System nach einem der Ansprüche 1 bis 4, **dadurch gekennzeichnet, dass** die Kapsel oder Kartusche (20) auf einem entnehmbaren und wegwerfbaren Träger angeordnet ist.

6. System nach einem der Ansprüche 1 bis 5, **dadurch gekennzeichnet, dass** es außerdem einen Ventilator (40) umfasst.

7. System nach Anspruch 6, **dadurch gekennzeichnet, dass** der Ventilator (40) für zwei Betriebsarten, nämlich eine langsame und eine schnelle Betriebsart, ausgelegt ist.

8. System nach Anspruch 7, **dadurch gekennzeichnet, dass** der Ventilator (40) zunächst in der langsamen Betriebsart gesteuert wird, wenn ein Anruf erfasst wird, um die Diffusion eines Parfums zu gewährleisten, und dann in der schnellen Betriebsart gesteuert wird, um die Abkühlung jeder aktivierten Kartusche oder Kapsel (20) zu gewährleisten.

9. System nach einem der Ansprüche 1 bis 8, **dadurch gekennzeichnet, dass** das Steuermittel so beschaffen ist, dass es programmiert werden kann, um eine Diffusion eines die Identität des Anrufers repräsentierenden Parfums auf der Grundlage einer der Modalitäten zu gewährleisten, die aus der Gruppe gewählt sind, die umfasst: eine autonome Programmierung mit Hilfe von Tasten, die an dem Steuermittel (30) vorgesehen sind, eine Programmierung mit Hilfe von Tasten, die an der zugeordneten Endeinrichtung (10) vorgesehen sind, oder aber eine Programmierung durch Validierung von Anrufen, die bei der zugeordneten Endeinrichtung (10) empfangen werden.
